# FASCICULE DE BREVET EUROPEEN

(11) **EP 2 420 138 B1**
(45) Date de publication et mention de la délivrance du brevet: **02.07.2014**
(21) Numéro de dépôt: 11160010.2
(22) Date de dépôt: 28.03.2011
(51) Int. Cl.: A01M 7/00, B05B 1/20, B05B 3/00

(54) **Système de production d'au moins un courant d'air de section transversale allongée**
Erzeugungsverfahren mindestens eines Luftstroms mit verlängertem Querschnitt
System for producing at least one air current with elongate cross section

(30) Priorité: 17.08.2010 FR 1056636
(43) Date de publication de la demande: 22.02.2012
(73) Titulaire: EXEL INDUSTRIES, 51200 Epernay (FR)
(72) Inventeur: Ballu, Patrick, 51100 Reims (FR)
(74) Mandataire: Myon, Gérard Jean-Pierre

(56) Documents cités:
- EP-A1- 1 468 604
- GB-A- 797 315
- US-A- 4 274 589

## Description

La présente invention concerne un système de production d'au moins un courant d'air de section transversale allongée.

Pour projeter un produit phytosanitaire sur des végétaux, il est connu d'utiliser des caissons de pulvérisation qui peuvent être montés horizontalement ou verticalement sur un tracteur et qui produisent un courant d'air sous la forme d'une nappe. Des gicleurs projettent le produit phytosanitaire qui est entraîné sur les végétaux par le courant d'air.

EP-A-1-0 653 157 concerne un dispositif de pulvérisation qui comprend des rampes de projection composées chacune d'au moins un caisson étanche allongé. Chaque caisson comporte des passages qui débouchent de part et d'autre du caisson et qui sont, d'une part, perpendiculaires à un axe longitudinal du caisson, et, d'autre part, parallèles entre eux. Les passages présentent un profil, le long d'un axe d'une section transversale du caisson, convergent puis divergent. Un injecteur d'air comprimé est disposé dans la partie d'admission d'air de chaque passage, de manière coaxiale, de sorte que l'air en sortie des injecteurs entraine de l'air induit dans les passages qui est accéléré par effet Venturi. Des gicleurs sont placés à proximité d'un bord de projection du caisson et projettent un liquide phytosanitaire, qui est entraîné sur les végétaux à traiter par l'air des passages. Cependant, les injecteurs obstruent partiellement la partie d'admission des passages, ce qui limite l'écoulement de l'air qui traverse les passages. Le liquide phytosanitaire est donc projeté de manière non totalement satisfaisante. De plus, les injecteurs et leurs conduits d'alimentation en air comprimé alourdissent le dispositif. Par ailleurs, le dispositif nécessite la présence d'un filtre en amont de la partie d'admission d'air de chaque passage pour empêcher les corps étrangers de pénétrer dans les passages et d'endommager les injecteurs. Ce filtre permet également de protéger les injecteurs, qui dépassent du caisson, des impacts de la végétation. Cependant, le filtre peut se boucher et alourdit le dispositif. Enfin, le flux d'air projeté par les injecteurs présente une section dont les dimensions sont inférieures à la section transversale des passages, ce qui limite le débit de l'air en sortie des passages. En outre, le dispositif a une architecture complexe, ce qui le rend relativement couteux et délicat à fabriquer.

EP-A-1 468 604, sur lequel est basé le préambule de la revendication 1, divulgue un caisson de pulvérisation dont la section transversale est en forme de U. En service, de l'air sous pression est évacué par des sorties qui sont percées dans les extrémités des branches latérales de la section en U du caisson. Des sorties supplémentaires sont percées dans les parois du caisson, de manière à former un contour annulaire autour de chaque buse de pulvérisation. Les sorties supplémentaires sont prévues pour empêcher l'air extérieur, par exemple lorsqu'il y a du vent, d'emporter les gouttelettes de liquide phytosanitaire et de l'éloigner de la végétation à traiter. Cependant, un tel caisson n'est pas prévu pour produire un courant d'air dont le débit est suffisamment important pour assurer une projection satisfaisante du liquide phytosanitaire.

C'est à ces inconvénients qu'entend plus particulièrement remédier l'invention en proposant un système léger, facile et peu couteux à fabriquer, pour la production d'un courant d'air ayant des caractéristiques optimisées.

A cet effet, l'invention a pour objet un système de production d'au moins un courant d'air de section transversale allongée, tel que défini à la revendication 1.

Grâce à l'invention, la synergie des jets d'air des sorties latérales et des sorties centrales permet d'augmenter significativement, par exemple d'environ 20%, le débit du courant d'air par rapport aux systèmes connus, ce qui améliore la portée de la projection du liquide phytosanitaire. En particulier, comme les flux d'air générés par les sorties latérales longent la paroi du caisson, ils entraînent un débit d'air induit extérieur au caisson relativement important, ce qui contribue à améliorer la portée de la projection du liquide phytosanitaire. De plus, le système d'injection d'air ne gène pas l'écoulement de l'air et ne nécessite pas la présence d'un filtre ou de conduits d'alimentation à l'intérieur du caisson.

Des aspects avantageux mais non obligatoires de l'invention sont spécifiés aux revendications 2 à 12.

L'invention sera mieux comprise et d'autres avantages de celle-ci apparaîtront plus clairement à la lumière de la description qui va suivre d'un système de production d'un flux d'air de section transversale allongée et d'un tracteur équipé d'un tel système, donnée uniquement à titre d'exemple et faite en référence aux dessins dans lesquels :
- la figure 1 est une vue arrière d'un tracteur équipé d'un système selon l'invention ;
- la figure 2 est une coupe selon la ligne II-II à la figure 1 ;
- les figures 3 à 7 sont des vues semblables à la figure 2 illustrant respectivement des deuxième, troisième, quatrième, cinquième et sixième modes de réalisation de l'invention.

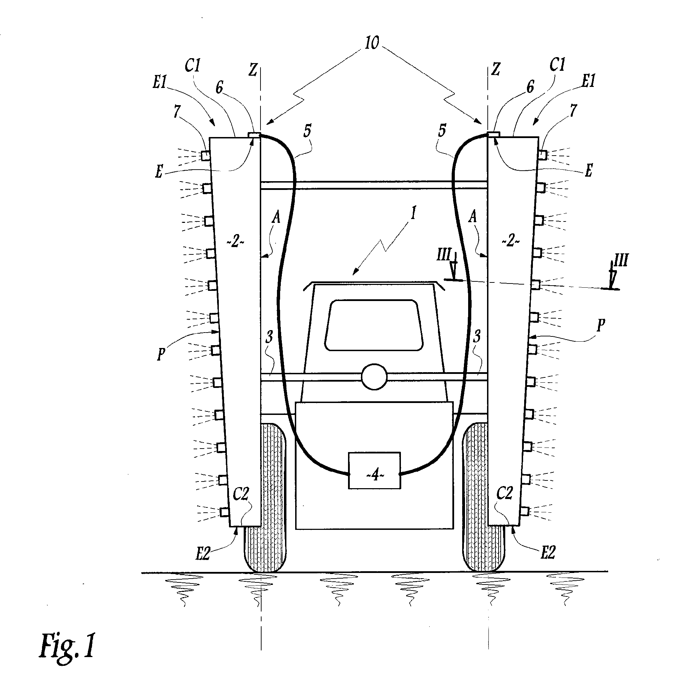

La figure 1 montre un tracteur 1 équipé d'un système 10 de production de deux courants d'air. Le système 10 comprend deux caissons allongés 2 semblables qui s'étendent chacun selon un axe longitudinal Z globalement vertical. Les caissons 2 sont disposés de part et d'autre du tracteur 1 et sont supportés par un portique 3. Des conduits 5 relient un compresseur 4 à chacun des caissons 2.

Les caissons 2 peuvent avoir d'autres dispositions et orientations, verticales, horizontales ou obliques, selon les problèmes posés.

Dans la suite de la description, on qualifie d'inférieurs les éléments qui sont plus proches du sol que les éléments qualifiés de supérieurs.

Chaque caisson 2 est creux et comporte une extrémité supérieure E1, obstruée par un couvercle supérieur C1, et une extrémité inférieure E2, obstruée par un couvercle inférieur C2. Les couvercles C1 et C2 sont globalement perpendiculaires à l'axe longitudinal Z. Chaque couvercle supérieur C1 est percé d'une entrée d'air E pourvue d'un embout 6 qui raccorde chaque caisson 2 à un des conduits 5, de sorte que chaque caisson 2 peut être alimenté en air comprimé, au niveau de son entrée E, par le compresseur 4.

Le profil de chaque caisson 2 est avantageusement décroissant, le long de l'axe longitudinal Z, entre l'entrée E du caisson 2 et l'extrémité inférieure E2 du caisson 2, ce qui est facile à fabriquer, par exemple en rotomoulage, et réduit le poids total du caisson. En variante non représentée, le caisson 2 présente une section longitudinale sensiblement constante, ce qui en facilite la fabrication, par exemple par extrusion.

Chaque caisson 2 comporte une partie d'admission A d'air extérieur au caisson 2, et une partie de projection P, tournée à l'opposé de la partie d'admission A. La partie d'admission A et la partie de projection P de chaque caisson 2 s'étendent le long de l'axe longitudinal Z du caisson 2 entre ses extrémités E1 et E2.

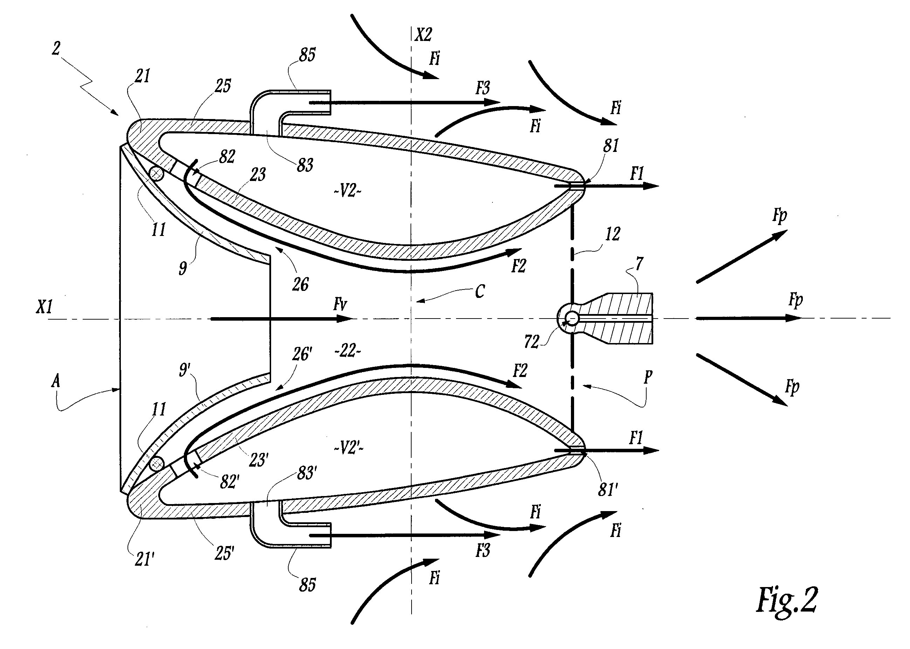

Chaque caisson 2 est pourvu de douze gicleurs 7, fixés à l'extérieur du caisson 2 au niveau de sa partie de projection P, qui sont alimentés en liquide phytosanitaire par un canal 72, visible à la figure 2 et parallèle à l'axe longitudinal Z, qui s'étend entre les extrémités supérieure E1 et inférieure E2 du caisson 2. Les gicleurs 7 sont aptes à projeter chacun un flux Fp de liquide phytosanitaire.

Dans la suite de la description, il est entendu que les éléments qualifiés d'éléments arrière sont plus proches de l'arrière du tracteur 1 que les éléments qualifiés d'éléments avant. De plus, les termes « amont » et « aval » font référence au sens général d'écoulement de l'air, depuis la partie d'admission A jusqu'à la partie de projection P.

La suite de la description concerne le caisson 2 situé à droite du tracteur 1 à la figure 1, mais l'autre caisson 2 est identique.

La figure 2 montre une section transversale du caisson 2, prise perpendiculairement à l'axe longitudinal Z du caisson 2 et passant par un des gicleurs 7.

Le caisson 2 comprend une paroi avant creuse 21 et une paroi arrière creuse 21' qui, en coupe transversale au caisson 2, sont en forme d'ovales aplatis. Les parois 21 et 21' sont situées respectivement du côté avant et du côté arrière d'un premier axe X1 de la section transversale du caisson 2 et sont symétriques l'une par rapport à l'autre par rapport au premier axe X1.

La paroi avant creuse 21 définit un volume interne V2 et la paroi arrière creuse 21' définit un volume interne V2'. L'entrée E du caisson 2 communique avec les volumes V2 et V2'.

Un passage 22, situé entre les parois creuses 21 et 21' et centré sur le premier axe X1, relie la partie d'admission A à la partie de projection P et permet à de l'air extérieur au caisson 2 de circuler de part et d'autre du caisson 2 entre la partie d'admission A et la partie de projection P.

Le passage 22 et les parois 21 et 21' s'étendent entre l'extrémité supérieure E1 et l'extrémité inférieure E2 du caisson 2.

Lorsqu'on parcourt l'axe X1 depuis la partie d'admission A jusqu'à la partie de projection P, le passage 22 est d'abord convergent, entre la partie d'admission A et un col C du passage 22, puis divergent, entre le col C et la partie de projection P. Le col C présente, dans le plan de la figure 2, une section de plus faibles dimensions par rapport aux parties d'admission A et de projection P

Chaque paroi creuse 21 et 21' comprend une portion interne 23 ou 23' et une portion externe 25 ou 25', qui est plus éloignée de l'axe X1 que la portion interne 23 ou 23'. Les portions internes 23 et 23' définissent la géométrie convergente-divergente du passage 22. Les portions externes 25 et 25' définissent la géométrie extérieure caisson 2.

Chaque paroi creuse 21 et 21' comporte une première sortie centrale 81 ou 81' sous la forme d'un trou ménagé dans la paroi creuse 21 ou 21' du côté de la partie de projection P, au niveau de la jonction entre la portion interne 23 ou 23' et la portion externe 25 ou 25'.

Les portions internes 23 et 23' des parois creuses 21 et 21' sont percées chacune d'une deuxième sortie centrale 82 ou 82'. Les deuxièmes sorties centrales 82 et 82' sont des trous qui débouchent dans la partie convergente du passage 22 et qui sont situés plus proches de la partie d'amission A que du col C.

Les portions externes 25 et 25' des parois 21 et 21' comportent chacune une sortie latérale 83 ou 83' qui est un trou situé plus proche de la partie d'admission A que de la partie de projection P. Les sorties latérales 83 et 83' sont pourvues chacune d'une buse coudée 85.

Chaque buse coudée 85 comprend une première partie fixée dans l'ouverture latérale 83 ou 83' et une deuxième partie située à l'extérieur du caisson 2.

La première partie de chaque buse coudée 85 est globalement parallèle à un deuxième axe X2 de la section transversale du caisson 2, perpendiculaire au premier axe X1, et la deuxième partie est globalement parallèle au premier axe X1 et est dirigée en direction de la partie de projection P. La deuxième partie de chaque buse coudée 85 est à peu près parallèle à la portion externe 25 ou 25' du caisson 2. De préférence, la deuxième partie de chaque buse coudée 85 est parallèle à la portion externe 25 ou 25' du caisson 2.

En variante non représentée, les buses coudées 85 peuvent être courbes. Dans ce cas, la sortie des buses courbes est dirigée de préférence selon une direction à peu près parallèle, voire parallèle, à la portion externe 25 ou 25' du caisson 2.

Les sorties 81 et 81', 82 et 82' et 83 et 83' sont symétriques deux à deux par rapport au premier axe X1. Les sorties centrales 81, 81' et 82 et 82', dans le plan de la figure 2, sont situées, suivant la direction du deuxième axe X2, entre les sorties latérales 83 et 83'.

Les sorties 81, 81', 82, 82', 83 et 83' sont des trous mais dans un autre mode de réalisation de l'invention, non représenté, les sorties peuvent être des fentes parallèles à l'axe longitudinal Z dont la longueur peut varier jusqu'à atteindre la longueur du caisson 2, considérée entre l'extrémité supérieure E1 et l'extrémité inférieure E2.

Dans le cas où les sorties sont des trous, elles sont réparties, avantageusement de manière régulière, le long de l'axe longitudinal Z, entre les extrémités supérieure E1 et inférieure E2 du caisson 2.

A la figure 2, les sorties 81, 81', 82, 82' et 83 et 83' sont situées dans le même plan de section transversale du caisson 2 que le gicleur 7 de la figure 2. Toutefois, ceci n'est pas obligatoire. Les sorties 81, 81', 82, 82', 83 et 83' peuvent être situées dans différents plans perpendiculaires à l'axe longitudinal Z du caisson 2. Par exemple, les sorties latérales 83 et 83' peuvent être situées dans un premier plan perpendiculaire à l'axe longitudinal Z, et les sorties centrales 81, 81' et 82 et 82' peuvent être situées dans un autre plan perpendiculaire à l'axe Z.

Un organe de guidage avant 9 et un organe de guidage arrière 9' sont situés dans le passage 22, du côté de la partie d'admission A, et s'étendent entre l'extrémité supérieure E1 et l'extrémité inférieure E2 du caisson 2. Les organes de guidage 9 et 9' sont courbes et ont une géométrie proche de celle des portions internes 23 et 23' des parois creuses 21 et 21'. Les organes de guidage 9 et 9' sont décalés par rapport aux portions internes 23 et 23' en direction du premier axe X1, de sorte qu'une fente interne avant 26 est formée entre l'organe de guidage avant 9 et la portion interne 23 et une fente interne arrière 26' est formée entre l'organe de guidage arrière 9' et la portion interne 23'.

Les organes de guidage 9 et 9' et les fentes 26 et 26' s'étendent depuis la partie d'admission A et se terminent avant le col C. Les fentes 26 et 26' communiquent avec les deuxièmes sorties centrales 82 et 82'.

Les organes de guidage 9 et 9' sont fixés aux parois creuses 21 ou 21' du caisson 2, au niveau de la partie d'admission A, par des moyens de fixation non représentés pouvant être, par exemple, des vis ou des rivets répartis le long de l'axe longitudinal Z.

Un joint rectiligne 11 est disposé dans chaque fente interne 26 et 26' du côté de la partie d'admission A et est situé plus proche de la partie d'admission A que les deuxièmes sorties centrales 82 et 82'. Les joints 11 s'étendent parallèlement à l'axe longitudinal Z entre l'extrémité supérieure E1 et l'extrémité inférieure E2 du caisson 2.

Chaque extrémité du canal 72 est fixée au caisson 2 par un élément d'assemblage 12, représenté en pointillés à la figure 2, qui relie le canal 72 au caisson 2. Cependant, le canal 72 et les gicleurs 7 peuvent être fixés au caisson 2 par tout élément approprié.

Lors du fonctionnement du système 10, les volumes internes V2 et V2' de chaque caisson 2 sont alimentés en air comprimé par le compresseur 4.

L'air comprimé s'échappe des volumes internes V2 et V2' du caisson 2 par les sorties centrales 81, 81', 82 et 82' et latérales 83 et 83' de sorte que chaque sortie produit un flux d'air.

Le cas échéant, la section dégressive de chaque caisson 2, entre l'entrée E et les sorties 81, 81', 82, 82', 83 et 83', permet de compenser les pertes de charge de sorte que les flux d'air s'échappant des sorties proches de l'extrémité inférieure E2 ont une pression sensiblement égale à celle des sorties proches de l'entrée E.

Premièrement, l'air comprimé s'échappe par les premières sorties centrales 81 et 81', de part et d'autre du flux de liquide phytosanitaire Fp, et chaque première sortie centrale 81 et 81' produit un premier flux d'air laminaire F1 qui contribue à l'entrainement du flux de liquide phytosanitaire Fp vers l'extérieur du caisson 2, le long du premier axe X1.

Deuxièmement, l'air comprimé s'échappe par les deuxièmes sorties centrales 82 et 82' et chaque deuxième sortie centrale produit un deuxième flux d'air laminaire F2 qui progresse dans les fentes internes 26 et 26' en direction du col C du passage 22. Ces deuxièmes flux d'air F2, lorsqu'ils quittent les fentes internes 26 et 26' pour rejoindre le passage 22, sont plaqués, par effet Coanda, le long des portions internes 23 et 23' des parois creuses 21 et 21'.

Les deuxièmes flux d'air F2 sont inducteurs : ils entrainent, par frottement, un flux Fv d'air induit extérieur au caisson 2 qui est aspiré dans le passage 22 au niveau de la partie d'admission A, et qui est entrainé dans le passage 22 jusqu'à la partie de projection P. La géométrie convergente puis divergente du passage 22 permet au flux Fv d'être accéléré dans le passage 22 par effet Venturi. Au niveau de la partie de projection P, le flux Fv présente une vitesse plus importante qu'au niveau de la partie d'admission A.

Troisièmement, les sorties latérales 83 et 83' produisent chacune un flux d'air F3 dirigé en direction de la partie de projection P par les buses coudées 85. Les flux d'air F3 longent une surface extérieure des portions externes 25 et 25' du caisson 2, c'est-à-dire une surface située à l'extérieur des volumes internes V2 et V2' du caisson 2. Les flux F3 sont inducteurs : ils entrainent par frottement des flux Fi d'air induit extérieur au caisson 2. Les flux F3 sont dirigés le long des portions externes 25 et 25' du caisson 2, grâce aux deuxièmes parties des buses coudées qui sont orientées à peu près parallèlement aux portions externes 25 et 25'. Cette disposition permet aux flux d'air F3 d'entraîner, par frottement, des flux Fi d'air induit extérieur au caisson 2 dont le débit est relativement important.

Lorsque l'on s'intéresse plus particulièrement à l'un des gicleurs 7 et aux sorties centrales et latérales 81, 81', 82, 82', 83 et 83' situées dans un plan de section transversale du caisson 2 proche de ce gicleur 7, on observe que les premiers flux laminaires F1 entrainent le flux de liquide phytosanitaire Fp et l'éloignent du caisson 2 de sorte que le flux de liquide phytosanitaire Fp rejoint les flux inducteurs F3 et les flux d'air induit Fi. La portée de la projection du flux Fp du liquide phytosanitaire se trouve améliorée grâce au débit important des flux d'air induit Fi.

Le flux Fv contribue à l'entrainement du flux de liquide phytosanitaire Fp.

Les deuxièmes sorties centrales 82 et 82' associées aux organes de guidage 9 et 9' constituent un système d'injection d'air, dans le passage 22, qui est optimisé. En effet, les deuxièmes sorties centrales 82 et 82' et les organes de guidage 9 et 9' n'obstruent pas le passage 22. De plus, les deuxièmes flux d'air laminaires F2 entrainent le flux Fv sur une grande surface, ce qui optimise les écoulements d'air du système 10.

La réunion des flux d'air F1, F2, F3, Fi et Fv forme un courant d'air qui s'écoule selon le premier axe X1 et dont la section transversale, c'est-à-dire la section prise perpendiculairement à l'axe X1, est allongée.

En d'autres termes, dans un plan perpendiculaire au premier axe X1, le courant d'air présente une section transversale de forme allongée dont la hauteur, considérée selon l'axe longitudinal Z du caisson 2, est supérieure à la largeur, considérée selon le deuxième axe X2.

En outre, l'axe longitudinal Z du caisson 2 est également un axe longitudinal de la section transversale du courant d'air.

On remarque que le système 10 présente un encombrement extérieur particulièrement faible et un poids fortement allégé.

Dans un autre mode de réalisation de l'invention, non représenté, les organes de guidage 9 et 9' peuvent être remplacés par plusieurs organes circulaires qui présentent chacun une géométrie de révolution autour d'axes X1 parallèles entre eux et répartis le long de l'axe longitudinal Z du caisson 2. Dans ce cas, le passage 22 peut être composé de plusieurs passages qui présentent chacun une géométrie de révolution autour des axes X1 des déflecteurs circulaires.

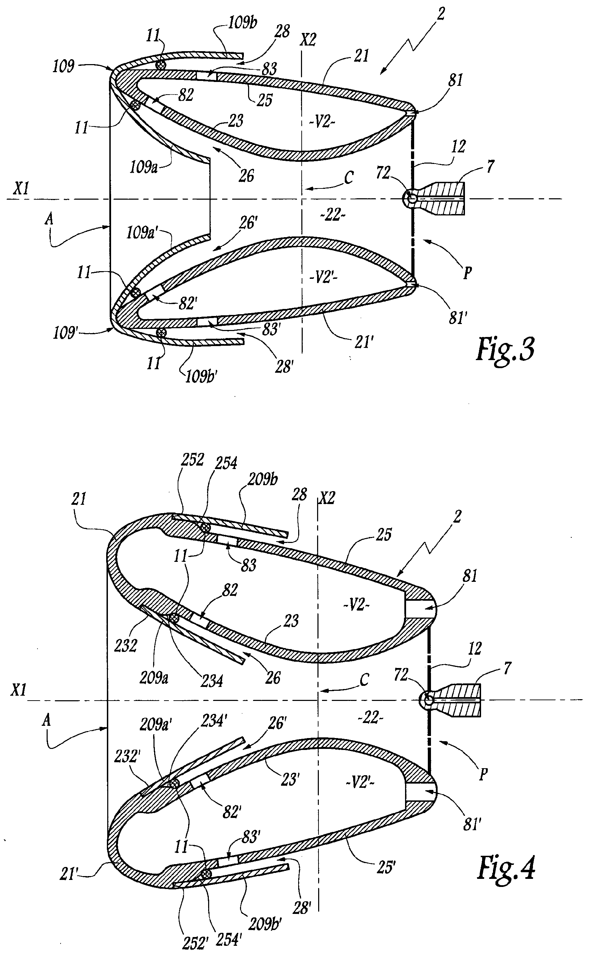

Les figures 3 et 4 correspondent respectivement à un deuxième et à un troisième mode de réalisation de l'invention dont le fonctionnement est analogue à celui du premier mode de réalisation et dans lequel les flux F1, F2, F3, Fp, Fv et Fi ne sont pas représentés. Aux figures 3 et 4 les éléments analogues à ceux des figures 1 et 2 portent les mêmes références.

Comme le montre la figure 3, chaque caisson 2 comporte un organe de guidage avant 109 et un organe de guidage arrière 109' qui sont globalement en forme de demi-tubes et qui sont situés au niveau de la partie d'admission A.

Chaque organe de guidage 109 et 109' comprend, d'une part, une partie interne courbe 109a ou 109a', dont la géométrie est analogue à celle des organes de guidage 9 et 9' de la figure 2, et d'autre part, une partie externe courbe 1 09b ou 1 09b', située le long de la portion externe 25 ou 25' de chaque paroi creuse 21 ou 21'.

Les parties externes 109b et 109b' des organes de guidage 109 et 109' sont décalées vers l'extérieur du caisson 2 par rapport aux portions externes 25 et 25' des parois creuses 21 et 21', de sorte qu'une fente externe 28 ou 28' s'étend entre, d'une part, la portion externe 25 ou 25' de la paroi creuse 21 ou 21', et, d'autre part, la partie externe 109b ou 109b' de chaque organe de guidage 109 ou 109'. On remarquera que les parties externes 109b et 109b' des organes de guidage 109 et 109' sont à peu près parallèles aux portions externes 25 et 25' du caisson 2. De même, les parties internes 109a et 109a' sont à peu près parallèles aux portions internes 23 et 23' du caisson 2.

Les parties internes 109a et 109a' des organes de guidage 109 et 109' sont décalées vers le premier axe X1 par rapport aux portions internes 23 et 23' des parois creuses 21 et 21', de sorte qu'une fente interne 26 ou 26', similaire à la fente 26 ou 26' de la figure 2 et qui, par commodité, porte la même référence, s'étend entre, d'une part, la portion interne 23 ou 23' de la paroi creuse 21 ou 21', et, d'autre part, la partie interne 109a ou 109a' de chaque organe de guidage 109 ou 109'.

Les fentes internes 26 et 26' communiquent respectivement avec les deuxièmes sorties centrales 82 et 82', et les fentes externes 28 et 28' communiquent respectivement avec les sorties latérales 83 et 83'.

Chaque organe de guidage 109 et 109' est fixé à la paroi creuse 21 ou 21' du caisson 2 par des moyens d'assemblage, par exemple des vis ou des rivets, qui sont répartis le long de l'axe longitudinal Z.

Un joint 11 est disposé dans chaque fente interne 26 et 26', et est situé plus proche de la partie d'admission A que les deuxièmes sorties centrales 82 et 82'.

Un joint 11 est disposé dans chaque fente externe 28 et 28', et est situé plus proche de la partie d'admission A que les sorties latérales 83 et 83'.

Les joints 11 permettent de contrôler la largeur des fentes internes 26 et 26' et externes 28 et 28'. Dans le cas du deuxième mode de réalisation, représenté à la figure 3, les joints 11 sont facultatifs.

Lors du fonctionnement du système 10, la partie externe 109b ou 109b' de chaque organe de guidage 109 ou 109' canalise le flux inducteur F3 dans la fente externe 28 ou 28' en direction de la partie de projection P, de la même manière que les buses coudées 85 du premier mode de réalisation. Les flux d'air F3 longent une surface extérieure des portions externes 25 et 25' du caisson 2, grâce aux parties externes 109b et 109b' des organes de guidage 109 et 109' qui sont à peu près parallèles aux portions externes 25 et 25'. Cette disposition permet ainsi aux flux d'air F3 d'entraîner, par frottement, des flux Fi d'air induit extérieur au caisson 2 dont le débit est relativement important. La portée de la projection du flux Fp du liquide phytosanitaire se trouve améliorée grâce au débit important des flux Fi d'air induit.

Comme le montre la figure 4, la portion interne 23 ou 23' de chaque paroi creuse 21 ou 21' comporte deux épaulements internes 232 et 234 ou 232' et 234' et la portion externe 25 ou 25' de chaque paroi creuse 21 ou 21' comporte deux épaulements externes 252 et 254 ou 252' et 254'.

Les épaulements 232, 232', 234, 234', 252, 252', 254 et 254' sont ménagés à proximité de la partie d'admission A et sont respectivement tournés vers les volumes V2 ou V2'.

Les épaulements externes 252 et 254 ou 252' et 254' de chaque paroi creuse 21 et 21' sont séparés par une portion plane au niveau de laquelle est fixé un organe de guidage externe 209b ou 209b'.

Les organes de guidage externes 209b et 209b' sont des plaques planes qui sont en appui contre l'épaulement externe 252 ou 252' et qui sont séparées de la portion externe 25 ou 25' de la paroi creuse 21 ou 21' par une fente externe 28 ou 28' similaire à la fente externe 28 ou 28' de la figure 3 et qui, par commodité, porte la même référence.

Les épaulements internes 232 et 234 ou 232' et 234' de chaque paroi creuse 21 et 21' sont séparés par une portion plane au niveau de laquelle est fixé un organe de guidage interne 209a ou 209a'.

Les organes de guidage internes 209a et 209a' sont des plaques planes qui sont en appui contre l'épaulement interne 232 ou 232' et qui sont séparées de la portion interne 23 ou 23' de la paroi creuse 21 ou 21' par une fente interne 26 ou 26', similaire à la fente interne 26 ou 26' de la figure 3 et qui, par commodité, porte la même référence.

Les organes de guidage internes 209a et 209a' sont à peu près parallèles aux portions internes 23 et 23'. De même, les organes de guidage externes 209b et 209b' sont à peu près parallèles aux portions externes 25 et 25'.

La géométrie des épaulements 232, 232', 234, 234', 252, 252', 254 et 254' et la géométrie des organes de guidage 209a, 209a', 209b et 209b' permet de définir la largeur des fentes 26, 26', 28 et 28'. Les joints 11 assurent un contrôle supplémentaire de la largeur des fentes 26, 26', 28 et 28'.

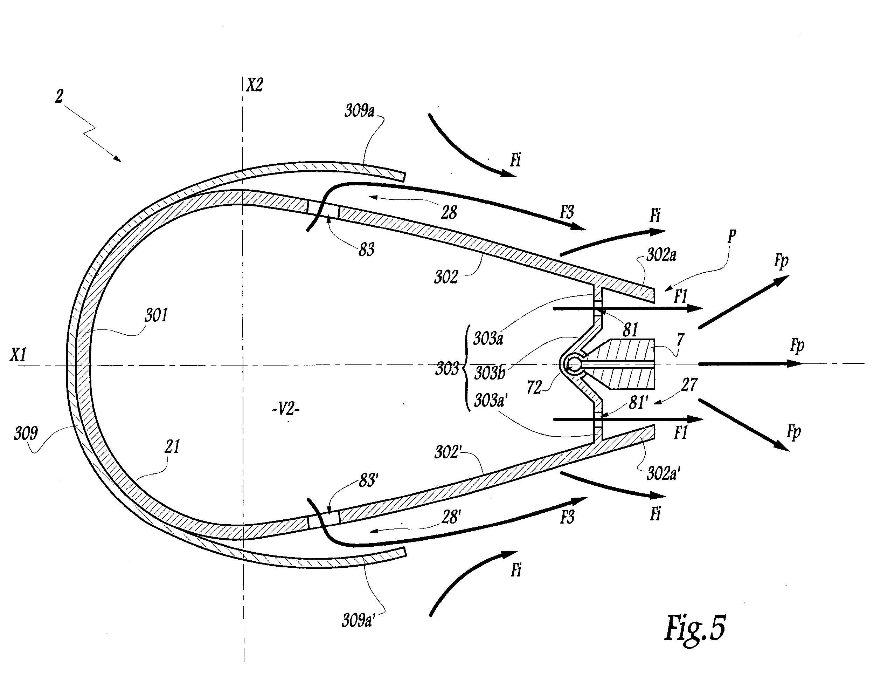

La figure 5 correspond à un quatrième mode de réalisation de l'invention dans lequel chaque caisson 2 comprend une unique paroi creuse 21, symétrique par rapport au premier axe X1.

La paroi creuse 21 définit le volume interne V2 du caisson 2 et comprend une portion arrondie 301, en forme de demi cercle, une portion avant 302 et une portion arrière 302'. Les portions avant et arrière 302 et 302' sont planes, sont parallèles à l'axe longitudinal Z et sont symétriques par rapport au premier axe X1.

La portion avant 302 comporte une sortie latérale avant 83 située à proximité de la portion arrondie 301, et la portion arrière 302' comporte une sortie latérale arrière 83' alignée, parallèlement au deuxième axe X2, avec la sortie latérale avant 83.

Dans le plan de la figure 5, les extrémités des portions avant et arrière 302 et 302' situées à l'opposé de la portion arrondie 301 sont plus proches du premier axe X1 que les extrémités des portions 302 et 302' situées du côté de la portion arrondie 301, de sorte que dans le plan de la figure 5, le caisson 2 présente une géométrie qui évoque la forme d'une goutte d'eau dont la pointe correspond à la partie de projection P.

La paroi creuse 21 du caisson 2 comprend une portion latérale 303 qui est perpendiculaire au premier axe X1 et qui relie la portion avant 302 à la portion arrière 302'. Chaque portion avant et arrière 302 et 302' s'étend de part et d'autre de la portion latérale 303 de sorte que des extrémités 302a et 302a' des portions avant et arrière 302 et 302', situées à l'opposé de la portion arrondie 301, définissent un renfoncement 27, situé à l'extérieur du volume V2 du caisson 2, dans lequel sont logés les gicleurs 7.

La portion latérale 303 comprend une partie avant plane 303a et une partie arrière plane 303a' entre lesquelles est située une partie centrale 303b.

Les parties avant 303a et arrière 303a' de la portion latérale 303 comportent chacune une sortie centrale 81 ou 81' sous la forme d'un trou dont l'axe est parallèle à l'axe X1.

Les sorties centrales 81 et 81', dans le plan de la figure 5, sont situées, suivant la direction du deuxième axe X2, entre les sorties latérales 83 et 83'.

Le canal 72 d'alimentation des gicleurs 7 est logé au niveau de la partie centrale 303b de la portion latérale 303.

Un organe de guidage 309, globalement en forme de demi tube, est fixé à la partie arrondie 301 du caisson 2.

L'organe de guidage 309 comprend une portion avant 309a, qui est décalée vers l'extérieur du caisson 2 par rapport à la partie avant 302, de sorte qu'une fente externe avant 28 s'étend entre la portion avant 309a et la partie avant 302.

L'organe de guidage 309 comprend également une portion arrière 309a' qui est décalée vers l'extérieur du caisson 2 par rapport à la portion arrière 302' de la paroi creuse 21, de sorte qu'une fente externe arrière 28' s'étend entre la portion arrière 309a' de l'organe de guidage 309 et la portion arrière 302' de la paroi creuse 21.

La portion avant 309a de l'organe de guidage 309 est à peu près parallèle à la partie avant 302 du caisson 2. De même, la portion arrière 309a' est à peu près parallèle à la portion arrière 302' du caisson 2.

Lors du fonctionnement du système 10, le volume V2 du caisson 2 est alimenté en air comprimé par le compresseur 4.

L'air comprimé s'échappe du volume interne V2 par les sorties centrales 81 et 81' et latérales 83 et 83' de sorte que chaque sortie produit un flux d'air.

L'air comprimé s'échappe des sorties centrales 81 et 81', de part et d'autre du flux de liquide phytosanitaire Fp, et chaque sortie centrale produit un flux d'air laminaire F1 qui contribue à l'entrainement du flux de liquide phytosanitaire Fp vers l'extérieur du caisson 2, le long du premier axe X1.

Les sorties latérales 83 et 83' produisent chacune un flux d'air F3 dirigé en direction de la partie de projection P par les portions avant 309a et arrière 309a' de l'organe de guidage 309. Les flux F3 sont inducteurs, ils entrainent par frottement des flux Fi d'air induit extérieur au caisson 2.

Les flux F3 longent une surface extérieure des parties 302 et 302' du caisson 2. Cette disposition permet aux flux F3 d'entraîner, par frottement, des flux Fi d'air induit extérieur au caisson 2 dont le débit est relativement important.

Lorsqu'on s'intéresse plus particulièrement à l'un des gicleurs 7 et aux sorties centrales 81 et 81' et latérales 83 et 83' situées dans un plan de section transversale du caisson 2 proche de ce gicleur 7, on observe que les flux F1 entrainent le flux de liquide phytosanitaire Fp et l'éloignent du caisson 2 de sorte que le flux de liquide phytosanitaire Fp rejoint les flux latéraux F3 et les flux induits Fi. La portée de la projection du flux Fp du liquide phytosanitaire se trouve améliorée grâce au débit important des flux Fi d'air induit extérieur au caisson.

La réunion des flux d'air F1, F3 et Fi forme un courant d'air qui s'écoule selon le premier axe X1 dont la section transversale, c'est-à-dire la section prise perpendiculairement à l'axe X1, est allongée.

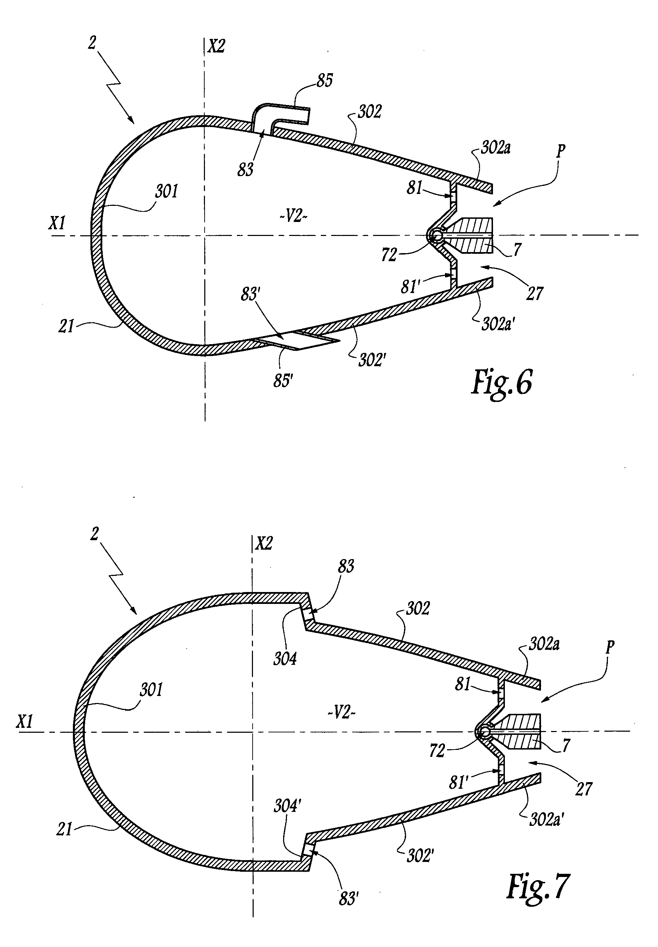

Les figures 6 et 7 correspondent respectivement à un cinquième et à un sixième mode de réalisation de l'invention dont le fonctionnement est analogue à celui du système 10 du quatrième mode de réalisation et dans lequel les flux d'air F1, F3, Fp et Fi ne sont pas représentés. Aux figures 6 et 7 les éléments analogues à ceux de la figure 5 portent les mêmes références.

Comme le montre la figure 6, le caisson 2 comporte une seule paroi creuse 21 dont la géométrie est similaire à celle du caisson 2 de la figure 5.

Une buse coudée 85 est fixée dans la sortie latérale avant 83 de la même manière que les buses coudées 85 de la figure 2. La buse coudée 85 comprend ainsi une seconde partie à peu près parallèle à la partie avant 302. De préférence, la seconde partie est parallèle à la partie avant 302.

Une deuxième buse rectiligne 85' est fixée dans la sortie latérale arrière 83' et a la forme d'un cylindre de section circulaire dont l'axe longitudinal s'éloigne du premier axe X1 en direction de la partie de projection P.

Dans un autre mode de réalisation de l'invention, non représenté, les sorties latérales 83 et 83' du caisson 2 peuvent être pourvues chacune d'une buse coudée 85 ou rectiligne 85', ou d'un organe de guidage analogue à ceux des figures 3 et 4.

Lors du fonctionnement du système 10 conforme au cinquième mode de réalisation, le flux inducteur F3 de chaque sortie latérale 83 et 83' s'écoule dans les buses 85 et 85' au lieu de s'écouler dans les fentes 28 et 28'.

Comme le montre la figure 7, la paroi creuse 21 du caisson 2 comporte, d'une part, un épaulement avant 304 qui relie la portion arrondie 301 à la portion avant 302, et, d'autre part, un épaulement arrière 304' qui relie la portion arrondie 301 à la portion arrière 302'.

Chaque épaulement 304 et 304' est globalement perpendiculaire au premier axe X1 et comporte une sortie latérale 83 ou 83' sous la forme d'un trou dont l'axe est dirigé vers la partie de projection P. Les sorties latérales 83 et 83' sont dirigées à peu près parallèlement aux portions avant 302 et arrière 302', ce qui permet de produire des flux F3 qui longent une surface extérieure des portions 302 et 302'.

Lors du fonctionnement du système 10 conforme au sixième mode de réalisation, le flux inducteur F3 de chaque sortie latérale 83 et 83' s'écoule dans les sorties latérales 83 et 83' et est dirigé directement vers la partie de projection P, sans l'aide d'une buse ou d'un organe de guidage.

Dans un autre mode de réalisation, non représenté, un robinet anti-gouttes peut être inséré entre le canal 72 et au moins un gicleur 7.

De plus, les portions avant 302 et arrière 302' de la paroi creuse 21 du caisson 2 peuvent ne pas s'étendre de part et d'autre d'au moins un gicleur 7 et, avantageusement, une plaque de protection, démontable ou rapportée, peut être fixée parallèlement à l'axe longitudinal Z pour protéger le gicleur 7.

Dans une variante des quatrième, cinquième et sixième modes de réalisation, au moins un caisson 2 peut être symétrique par rapport au deuxième axe X2, de sorte que le caisson 2 est apte à produire deux courants d'air de directions opposées.

Les caractéristiques individuelles des différents modes de réalisation peuvent être combinées pour former d'autres modes de réalisation non représentés.

## Revendications

1. Système (10) de production d'au moins un courant d'air de section transversale allongée, ce courant d'air étant composé de plusieurs flux d'air (F1, F2, F3, Fv, Fi) répartis le long de la section transversale du courant d'air, ce système comprenant au moins un caisson rigide allongé (2), qui s'étend en longueur suivant l'axe longitudinal (Z) de la section transversale du courant d'air et qui définit un volume interne longitudinal (V2, V2') à l'intérieur duquel circule de l'air sous pression, entre, d'une part, une entrée (E) d'alimentation en air comprimé, et, d'autre part, des sorties (81, 81', 82, 82', 83, 83') aptes à générer chacune un flux d'air (F1, F2, F3), lesdites sorties incluant, à la fois, des sorties latérales (83, 83'), qui sont situées de part et d'autre d'un premier axe (X1) d'une section transversale du caisson (2) et qui génèrent des flux d'air (F3) qui sont aptes à entrainer un flux d'air induit (Fi) extérieur au caisson (2), et des sorties centrales (81, 81', 82, 82') qui, dans une section transversale du caisson (2), sont situées, suivant la direction d'un second axe (X2) perpendiculaire au premier axe (X1), entre les sorties latérales (83, 83') et dont les flux d'air (F1, F2) qu'elles génèrent sont laminaires, le système (10) étant **caractérisé en ce que** les flux d'air (F3) générés par les sorties latérales (83, 83') longent une surface extérieure d'une portion (25, 25' ; 302, 302') du caisson (2).

2. Système (10) selon la revendication 1, **caractérisé**
- **en ce que** chaque caisson (2) comprend des gicleurs (7) de pulvérisation d'un flux de liquide phytosanitaire (Fp), répartis selon l'axe longitudinal (Z) du caisson (2) à l'extérieur du volume interne (V2, V2') du caisson (2) et
- en ce les flux d'air (F1, F2) des sorties centrales sont aptes à entrainer le flux de liquide phytosanitaire (Fp) de chaque gicleur (7), de sorte que le flux de liquide phytosanitaire (Fp) se mélange avec des flux d'air induits (Fi) entrainés par les flux d'air (F3) des sorties latérales (83, 83').

3. Système (10) selon l'une des revendications précédentes, **caractérisé en ce qu'**au moins certaines des sorties (81, 81', 82, 82', 83, 83') sont des trous qui sont répartis selon l'axe longitudinal (Z).

4. Système (10) selon l'une des revendications précédentes, **caractérisé en ce qu'**au moins une des sorties (81, 81', 82, 82', 83, 83') est une fente dont l'axe longitudinal est globalement parallèle à l'axe longitudinal (Z) du caisson (2), le cas échéant cette fente ayant une longueur atteignant la longueur du caisson (2).

5. Système (10) selon l'une des revendications précédentes, **caractérisé en ce qu'**au moins une sortie (81, 81', 82, 82', 83, 83') est pourvue d'une buse (85, 85') pouvant être rectiligne, coudée ou courbe.

6. Système (10) selon la revendication 5, **caractérisé en ce qu'**au moins une buse (85, 85') est orientée parallèlement à une portion (25, 25' ; 302, 302') du caisson (2).

7. Système (10) selon l'une des revendications précédentes, **caractérisé en ce que** le caisson (2) est pourvu d'un organe de guidage (9, 9' ; 109, 109' ; 209a, 209a' ; 209b, 209b' ; 309a, 309a') pouvant être plan ou courbe, pour la canalisation du flux d'air (F1, F2, F3) d'au moins une des sorties (81, 81', 82, 82', 83, 83').

8. Système (10) selon la revendication 7, **caractérisé en ce qu'**au moins un organe de guidage (9, 9', 109, 109', 209a, 209a', 209b, 2091a', 309) est parallèle à une portion (25, 25' ; 302, 302') du caisson (2).

9. Système (10) selon l'une des revendications précédentes, **caractérisé**
- **en ce que** le caisson (2) comporte une unique paroi creuse (21), qui s'étend le long de l'axe longitudinal (Z) du caisson (2) et qui définit le volume interne (V2) du caisson (2) et
- **en ce que** les sorties centrales (81, 81') et les sorties latérales (83, 83') sont ménagées dans ladite paroi creuse (21).

10. Système (10) selon l'une des revendications 1 à 8, **caractérisé**
- **en ce que** le caisson (2) comporte deux parois creuses (21, 21'), qui s'étendent le long de l'axe longitudinal (Z) du caisson (2), qui sont situées de part et d'autre du premier axe (X1) et entre lesquelles s'étend un passage central (22) centré sur le premier axe (X1), dont le profil, le long du premier axe (X1), est convergent puis divergent,
- **en ce que** les sorties centrales (81, 81', 82, 82', 83, 83') sont ménagées dans chaque paroi creuse (21, 21'), en regard du premier axe (X1) et au niveau de la portion convergente du passage (22) et
- **en ce que** chaque paroi creuse (21, 21') est pourvue, au niveau d'une portion (23, 23') en regard du premier axe (X1), d'un organe de canalisation (109, 109') du flux laminaire (F2), situé dans la portion convergente du passage (22), de sorte que, par effet Coanda, le flux laminaire (F2) est plaqué contre les parois du passage (22) et entraine au travers du passage un flux d'air induit (Fi), extérieur au caisson (2), qui est accéléré dans le passage (22) par effet Venturi.

11. Système (10) selon la revendication 10, **caractérisé**
- **en ce que** le passage central (22) est divisé en plusieurs passages dont le profil, le long du premier axe (X1), est convergent puis divergent et qui sont répartis le long de l'axe longitudinal (Z) du caisson (2),
- et **en ce que** les passages présentent chacun une symétrie de révolution.

12. Système (10) selon l'une des revendications précédentes, **caractérisé en ce qu'**au moins un caisson (2) est apte à produire deux courants d'air selon des directions opposées.

## Patentansprüche

1. System (10) für die Erzeugung wenigstens eines Luftstroms mit länglichem Querschnitt, wobei dieser Luftstrom aus mehreren Luftflüssen (F1, F2, F3, Fv, Fi) zusammengesetzt ist, die längs des Querschnitts des Luftstroms verteilt sind, wobei dieses System wenigstens einen länglichen starren Kasten (2) umfasst, dessen Längsrichtung sich längs der Längsachse (Z) des Querschnitts des Luftstroms erstreckt und der ein longitudinales Innenvolumen (V2, V2') definiert, innerhalb dessen die Luft unter Druck einerseits zwischen einem Versorgungseingang (E) für Druckluft und andererseits Ausgängen (81, 81', 82, 82', 83, 83'), die jeweils einen Luftfluss (F1, F2, F3) erzeugen können, zirkuliert, wobei die Ausgänge sowohl seitliche Ausgänge (83, 83'), die sich beiderseits einer ersten Achse (X1) eines Querschnitts des Kastens (2) befinden und Luftflüsse (F3) erzeugen, die einen induzierten Luftfluss (Fi) außerhalb des Kastens (2) hervorrufen können, als auch mittige Ausgänge (81, 81', 82, 82'), die sich in einem Querschnitt des Kastens (2) längs der Richtung einer zweiten Achse (X2) senkrecht zu der ersten Achse (X1) zwischen den seitlichen Ausgängen (83, 83') befmden und deren Luftflüsse (F1, F2), die sie erzeugen, laminar sind, umfassen, wobei das System (10) **dadurch gekennzeichnet ist, dass** die durch die seitlichen Ausgänge (83, 83') erzeugten Luftflüsse (F3) längs einer äußeren Oberfläche eines Abschnitts (25, 25'; 302, 302') des Kastens (2) verlaufen.

2. System (10) nach Anspruch 1, **dadurch gekennzeichnet,**
- **dass** jeder Kasten (2) Düsen (7) für die Zerstäubung eines phytosanitären Flüssigkeitsflusses (Fp) umfasst, die längs der Längsachse (Z) des Kastens (2) außerhalb des Innenvolumens (V2, V2') des Kastens (2) verteilt sind, und
- **dass** die Luftflüsse (F1, F2) der mittigen Ausgänge den phytosanitären Fluss (Fp) jeder Düse (7) in der Weise hervorrufen können, dass sich der phytosanitäre Flüssigkeitsfluss (Fp) mit den induzierten Luftflüssen (Fi), die durch die Luftflüsse (F3) der seitlichen Ausgänge (83, 83') hervorgerufen werden, mischt.

3. System (10) nach einem der vorhergehenden Ansprüche, **dadurch gekennzeichnet, dass** wenigstens Bestimmte der Ausgänge (81, 81', 82, 82', 83, 83') Löcher sind, die längs der Längsachse (Z) verteilt sind.

4. System (10) nach einem der vorhergehenden Ansprüche, **dadurch gekennzeichnet, dass** wenigstens einer der Ausgänge (81, 81', 82, 82', 83, 83') ein Schlitz ist, dessen Längsachse im Allgemeinen zu der Längsachse (Z) des Kastens (2) parallel ist, wobei dieser Schlitz gegebenenfalls eine Länge besitzt, die die Länge des Kastens (2) erreicht.

5. System (10) nach einem der vorhergehenden Ansprüche, **dadurch gekennzeichnet, dass** wenigstens ein Ausgang (81, 81', 82, 82', 83, 83') mit einer Strahldüse (85, 85') versehen ist, die geradlinig, gekröpft oder gekrümmt sein kann.

6. System (10) nach Anspruch 5, **dadurch gekennzeichnet, dass** wenigstens eine Strahldüse (85, 85') parallel zu einem Abschnitt (25, 25'; 302, 302') des Kastens (2) orientiert ist.

7. System (10) nach einem der vorhergehenden Ansprüche, **dadurch gekennzeichnet, dass** der Kasten (2) mit einem Führungsorgan (9, 9'; 109, 109'; 209a, 209a'; 209b, 209b'; 309a, 309a') versehen ist, das eben oder gekrümmt sein kann, um den Luftfluss (F1, F2, F3) wenigstens eines der Ausgänge (81, 81', 82, 82', 83, 83') zu lenken.

8. System (10) nach Anspruch 7, **dadurch gekennzeichnet, dass** wenigstens ein Führungsorgan (9, 9', 109, 109', 209a, 209a', 209b, 209b', 309) zu einem Abschnitt (25, 25'; 302, 302') des Kastens (2) parallel ist.

9. System (10) nach einem der vorhergehenden Ansprüche, **dadurch gekennzeichnet,**
- **dass** der Kasten (2) eine einzige Hohlwand (21) aufweist, die sich längs der Längsachse (Z) des Kastens (2) erstreckt und die das Innenvolumen (V2) des Kastens (2) definiert, und
- **dass** die mittigen Ausgänge (81, 81') und die seitlichen Ausgänge (83, 83') in der Hohlwand (21) ausgebildet sind.

10. System (10) nach einem der Ansprüche 1 bis 8, **dadurch gekennzeichnet,**
- **dass** der Kasten (2) zwei Hohlwände (21, 21') umfasst, die sich längs der Längsachse (Z) des Kastens (2) erstrecken, die sich beiderseits der ersten Achse (X1) befinden und zwischen denen sich ein mittiger Durchlass (22) erstreckt, der auf die erste Achse (X1) zentriert ist und dessen Profil längs der ersten Achse (X1) erst konvergiert und dann divergiert,
- **dass** die mittigen Ausgänge (81, 81', 82, 82', 83, 83') in jeder Hohlwand (21, 21') gegenüber der ersten Achse (X1) und auf Höhe des konvergenten Abschnitts des Durchlasses (22) ausgebildet sind und
- **dass** jede Hohlwand (21, 21') auf Höhe eines Abschnitts (23, 23') gegenüber der ersten Achse (X1) mit einem Lenkungsorgan (109, 109') für den laminaren Fluss (F2) versehen ist, das sich in dem konvergenten Abschnitt des Durchlasses (22) befindet, derart, dass der laminare Fluss (F2) durch den Coanda-Effekt gegen die Wände des Durchlasses (22) gedrängt wird und durch den Durchlass einen induzierten Luftfluss (Fi) außerhalb des Kastens (2) hervorruft, der in dem Durchlass (22) durch den Venturi-Effekt beschleunigt wird.

11. System (10) nach Anspruch 10, **dadurch gekennzeichnet,**
- **dass** der mittige Durchlass (22) in mehrere Durchlässe unterteilt ist, deren Profil längs der ersten Achse (X1) konvergent und dann divergent ist und die längs der Längsachse (Z) des Kastens (2) verteilt sind,
- und **dass** die Durchlässe jeweils eine Rotationssymmetrie aufweisen.

12. System (10) nach einem der vorhergehenden Ansprüche, **dadurch gekennzeichnet, dass** wenigstens ein Kasten (2) zwei Luftströme in entgegengesetzten Richtungen erzeugen kann.

## Claims

1. System (10) for producing at least one air current that is elongated in cross-section and composed of several air flows (F1, F2, F3, Fv, Fi) distributed along the cross-section of the air current, wherein this system comprises at least one elongated rigid tank (2), which extends lengthwise along the longitudinal axis (Z) of the cross-section of the air current and which defines a longitudinal internal space (V2, V2'), inside which the air circulates under pressure between a compressed air feed inlet (E), on the one hand, and outlets (81, 81', 82, 82', 83, 83'), on the other hand, that are each capable of generating an air flow (F1, F2, F3), and said outlets at the same time include lateral outlets (83, 83'), which are located on both sides of a first axis (X1) of a cross-section of the tank (2) and generate air flows (F3) that are capable of entraining a generated air flow (Fi) outside the tank (2), and central outlets (81, 81', 82, 82'), which in a cross-section of the tank (2) are located between the lateral outlets (83, 83') in the direction of a second axis (X2) perpendicular to the first axis (X1), and the air flows (F1, F2) that they generate are laminar, said system (10) being **characterised in that** the air flows (F3) generated by the lateral outlets (83, 83') run along an outer surface of a portion (25, 25'; 302, 302') of the tank (2).

2. System according to claim 1, **characterised in that**
- each tank (2) comprises spray nozzles (7) for atomising a flow of phytopathological liquid (Fp) distributed along the longitudinal axis (Z) of the tank (2) outside the internal space (V2, V2') of the tank (2) and
- **in that** the air flows (F1, F2) of the central outlets are capable of entraining the flow of phytopathological liquid (Fp) of each spray nozzle (7) such that the flow of phytopathological liquid (Fp) mixes with the generated air flows (Fi) entrained by the air flows (F3) of the lateral outlets (83, 83').

3. System (10) according to one of the preceding claims, **characterised in that** at least some of the outlets (81, 81', 82, 82', 83, 83') are holes distributed along the longitudinal axis (Z).

4. System (10) according to one of the preceding claims, **characterised in that** at least one of the outlets (81, 81', 82, 82', 83, 83') is a slot, the longitudinal axis of which is substantially parallel to the longitudinal axis (Z) of the tank (2), and if necessary this slot has a length amounting to the length of the tank (2).

5. System (10) according to one of the preceding claims, **characterised in that** at least one outlet (81, 81', 82, 82', 83, 83') is provided with a pipe (85, 85') that can be rectilinear, bent or curved.

6. System (10) according to claim 5, **characterised in that** at least one pipe (85, 85') is oriented parallel to a portion (25, 25'; 302, 302') of the tank (2).

7. System (10) according to one of the preceding claims, **characterised in that** the tank (2) is provided with a guide element (9, 9'; 109, 109'; 209a, 209a'; 209b, 209b'; 309a, 309a') that can be plane or curved for directing the air flow (F1, F2, F3) of at least one of the outlets (81, 81', 82, 82', 83, 83').

8. System (10) according to claim 7, **characterised in that** at least one guide element (9, 9'; 109, 109'; 209a, 209a'; 209b, 209b'; 309) is parallel to a portion (25, 25'; 302, 302') of the tank (2).

9. System (10) according to one of the preceding claims, **characterised in that**
- the tank (2) comprises a single hollow wall (21), which extends along the longitudinal axis (Z) of the tank (2) and which defines the internal space (V2) of the tank (2) and
- **in that** the central outlets (81, 81') and the lateral outlets (83, 83') are arranged in said hollow wall (21).

10. System (10) according to one of claims 1 to 8, **characterised in that**
- the tank (2) comprises two hollow walls (21, 21'), which extend along the longitudinal axis (Z) of the tank (2), are located on both sides of the first axis (X1) and between which extends a central passage (22) that is centred on the first axis (X1) and with a profile along the first axis (X1) that is convergent then divergent,
- **in that** the central outlets (81, 81', 82, 82', 83, 83') are arranged in each hollow wall (21, 21') facing the first axis (X) and at the level of the convergent portion of the passage (22) and
- **in that** at the level of a portion (23, 23') facing the first axis (X1) each hollow wall (21, 21') is provided with an element (109, 109') for conducting the laminar flow (F2) located in the convergent portion of the passage (22) such that the laminar flow (F2) is pressed against the walls of the passage (22) by the Coanda effect and entrains a generated air flow (Fi) outside the tank (2) through the passage, which is accelerated in the passage (22) by the Venturi effect.

11. System (10) according to claim 10, **characterised in that**
- the central passage (22) is divided into several passages, the profile of which along the first axis (X1) is convergent then divergent and which are distributed along the longitudinal axis (Z) of the tank (2),
- and **in that** the passages are each rotationally symmetric.

12. System (10) according to one of the preceding claims, **characterised in that** at least one tank (2) is capable of producing two air currents in opposite directions.
